# EUROPEAN PATENT SPECIFICATION

(11) **EP 1 229 678 B1**
(45) Date of publication and mention of the grant of the patent: **18.01.2006**
(21) Application number: 01956955.7
(22) Date of filing: 20.08.2001
(51) Int. Cl.: H04J 13/04, H04B 1/707

(54) **BASE STATION APPARATUS, COMMUNICATION TERMINAL APPARATUS AND COMMUNICATION METHOD**
BASISSTATION, TEILNEHMERSTATION UND NACHRICHTENÜBERTRAGUNGSVERFAHREN
APPAREIL DE STATION DE BASE, APPAREIL DE TERMINAL DE COMMUNICATION ET PROCEDE DE COMMUNICATION

(30) Priority: 25.08.2000 JP 2000255515
(43) Date of publication of application: 07.08.2002
(73) Proprietor: MATSUSHITA ELECTRIC INDUSTRIAL CO., LTD., Kadoma-shi, Osaka 571-8501 (JP)
(72) Inventor: AOYAMA, Takahisa, Yokosuka-shi, Kanagawa 239-0841 (JP); MIYA, Kazuyuki, Asao-ku, Kawasaki-shi, Kanagawa 215-0021 (JP); HIRAMATSU, Katsuhiko, Yokosuka-shi, Kanagawa 238-0031 (JP); MIYOSHI, Kenichi, Minami-ku, Yokohama-shi, Kanagawa 232-00 (JP)
(74) Representative: Grünecker, Kinkeldey, Stockmair & Schwanhäusser Anwaltssozietät
(86) International application number: PCT/JP2001/007103
(87) International publication number: WO 2002/017532

(56) References cited:
- EP-A- 0 984 565
- WO-A-01/43309
- WO-A-99/23844
- JP-A- 9 008 770
- JP-A- 10 051 354
- P. BENDER ET AL.: 'CDMA/HDR: A bandwidth-efficient high-speed wireless data service for nomadic users' IEEE COM. MAG. vol. 38, no. 7, July 1997, pages 70 - 77, XP001052726

## Description

### Technical Field

The present invention relates to a base station apparatus, communication terminal apparatus, and communication method to be used in a cellular communication system.

### Background Art

In a cellular communication system, one base station apparatus performs radio communication with a plurality of communication terminal apparatuses simultaneously, and therefore, as demand has increased in recent years, so has the need for higher transmission efficiency.

One technology that has been proposed for increasing the transmission efficiency of a downlink from a base station apparatus to a communication terminal apparatus is HDR (High Data Rate). HDR is a communication method whereby a base station apparatus performs scheduling for allocating communication resources to communication terminal apparatuses by time division, and also sets a transmission rate for each communication terminal apparatus in accordance with the communication quality.

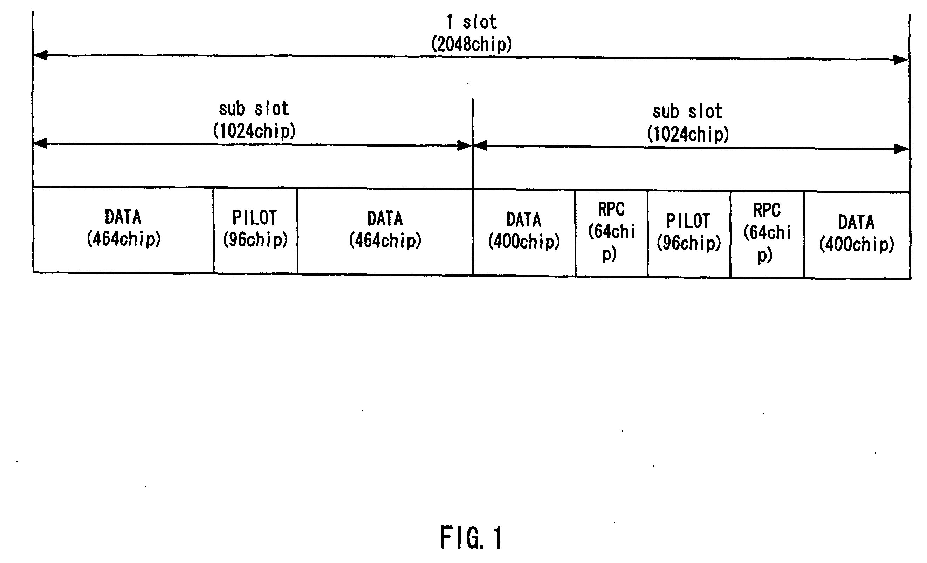

FIG.1 is a drawing showing the slot configuration of an HDR downlink signal. As shown in FIG. 1, each HDR slot is divided into two sub-slots, and a common pilot signal is embedded in each sub-slot by time multiplexing. This common pilot signal can be used in common by all communication terminal apparatuses. An RPC (Reverse Power Control) signal for controlling inbound signal transmission power is embedded by time multiplexing before and after one of the common pilot signals.

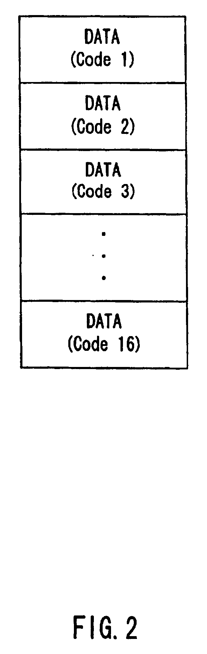

FIG.2 is a drawing showing the internal configuration of downlink signal data in the case of conventional HDR. As shown in FIG.2, fixed 16-code multiplexing is used for HDR data. The ratio of the levels of the respective code-multiplexed data items is also kept constant.

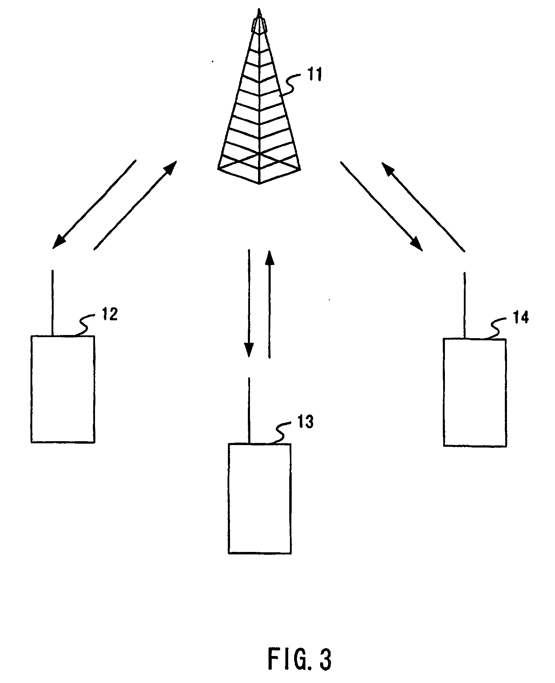

The operations performed by a base station apparatus and communication terminal apparatuses in order to set the transmission rate with HDR are described below using FIG.3. In FIG.3, it is assumed that a base station apparatus 11 is currently performing communication with communication terminal apparatuses 12 through 14.

First, the base station apparatus 11 transmits a common pilot signal to each of communication terminal apparatuses 12 through 14. Each of communication terminal apparatuses 12 through 14 estimates the communication quality using a CIR (Carrier to Interference Ratio) based on the common pilot signal, etc . , and finds a transmission rate at which communication is possible. Then, based on the transmission rate at which communication is possible, each of communication terminal apparatuses 12 through 14 selects a communication mode, which is a combination of packet length, error correction method, and modulation method, and transmits a signal indicating the communication mode to the base station apparatus 11 . The types of modulation method that can be used in each system are predetermined as BPSK, QPSK, 16QAM, 64QAM, and so forth. A plurality of transmission rates that can be used in each system are thus determined according to combinations of packet length, error correction method, and modulation method. Each communication terminal selects one of these transmission rates.

Based on the communication mode selected by each of communication terminal apparatuses 12 through 14, the base station apparatus 11 performs scheduling, sets a transmission rate for each communication terminal apparatus, and sends a signal indicating communication resource allocation to each of communication terminal apparatuses 12 through 14 via a control channel. Generally, taking improvement of system transmission efficiency into consideration, a base station apparatus allocates communication resources preferentially to a communication terminal apparatus that has a high transmission rate at which communication is possible.

The base station apparatus 11 then transmits data only to the relevant communication terminal apparatus in its allocated time. For example, if time t1 has been allocated to communication terminal apparatus 12, in time t1 the base station apparatus 11 transmits data only to communication terminal apparatus 12, and does not transmit data to communication terminal apparatus 13 or 14.

Each communication terminal apparatus receives a signal in its allocated time, and, based on the common pilot signal, compensates for phase shift, etc., before demodulating the data.

In this way, data transmission efficiency has conventionally been increased for the overall system by setting a transmission rate for each communication terminal apparatus according to channel quality by means of HDR, and performing communication resource allocation preferentially to a communication terminal apparatus with a high transmission rate at which communication is possible.

However, as the common pilot signal embedded in each sub-slot is time-multiplexed in a conventional cellular communication system as described above, there is a problem in that, when changes in the propagation environment are sudden, erroneous path detection occurs in a path search that detects received signal demodulation timing, and data-part channel estimation precision deteriorates, causing a deterioration of reception quality.

Document US 6, 175, 558 B1 discloses that in the CDMA radio multiplex transmission, transfer function of line is inferred by using common pilot signal and synchronous detection is performed accordingly. The transmitting end transmits by periodically inserting pilot symbols into one channel only of multiplexed channels. The receiving end infers line condition (transfer function) from the received pilots symbols and on the basis of the information thus obtained, performs synchronous detection of each channel multiplexed.

Document WO 01/43309 A2 provides systems and methods for providing improved wireless data communication. Multiple orthogonal sub-pilots are transmitted from a plurality of antenna elements for use in determining forward link channel. Forward link channel estimates may then be made by the preferred embodiment subscribed units and provided in a reverse link control channel to the corresponding base station. In this document, a dedicated pilot preferably replaces the common pilot for use in demodulation of high order modulation techniques such as PSK or QAM.

WO 99/23844 A is to improve the efficiency of a CDMA system by providing means for transmitting data on the forward and reverse links. Each mobile station communicates with one or more base stations and monitors the control channels for the duration of the communication with the base station. The control channels can be used by the base stations to transmit small amounts of data, paging messages addressed to a specific mobile station and broadcast messages to all mobile stations.

### Disclosure of Invention

It is an object of the present invention to provide a base station apparatus, communication terminal apparatus, and communication method that enable data-part reception quality to be maintained even when phase changes are sudden with HDR.

This object is achieved by transmitting a dedicated pilot signal using one of the codes used for data transmission when data is transmitted from a base station apparatus to a specific communication terminal using a plurality of spreading codes.

### Brief Description of Drawings

FIG.1 is a drawing showing the HDR slot configuration;
FIG.2 is a drawing showing the internal configuration of data with conventional HDR;
FIG. 3 is a drawing showing a communication mode using the conventional HDR method;
FIG.4 is a block diagram showing the configuration of a base station apparatus according to Embodiment 1 of the present invention;
FIG.5 is a drawing showing the internal configuration of data with HDR according to the above embodiment;
FIG.6 is a block diagram showing the configuration of a communication terminal apparatus according to the above embodiment;
FIG.7 is a block diagram showing the configuration of a base station apparatus according to Embodiment 2 of the present invention;
FIG.8 is a block diagram showing the configuration of a base station apparatus according to Embodiment 3 of the present invention;
FIG.9 is a block diagram showing the configuration of a base station apparatus according to Embodiment 4 of the present invention;
FIG. 10 is a block diagram showing the configuration of a base station apparatus according to Embodiment 5 of the present invention;
FIG.11 is a block diagram showing the configuration of a communication terminal apparatus according to the above embodiment;
FIG. 12 is a block diagram showing the configuration of a base station apparatus according to Embodiment 6 of the present invention;
FIG. 13 is a block diagram showing the configuration of a base station apparatus according to Embodiment 7 of the present invention; and
FIG.14 is a block diagram showing the configuration of a communication terminal apparatus according to the above embodiment.

### Best Mode for Carrying out the Invention

With reference now to the accompanying drawings, embodiments of the present invention will be explained in detail below.

### (Embodiment 1)

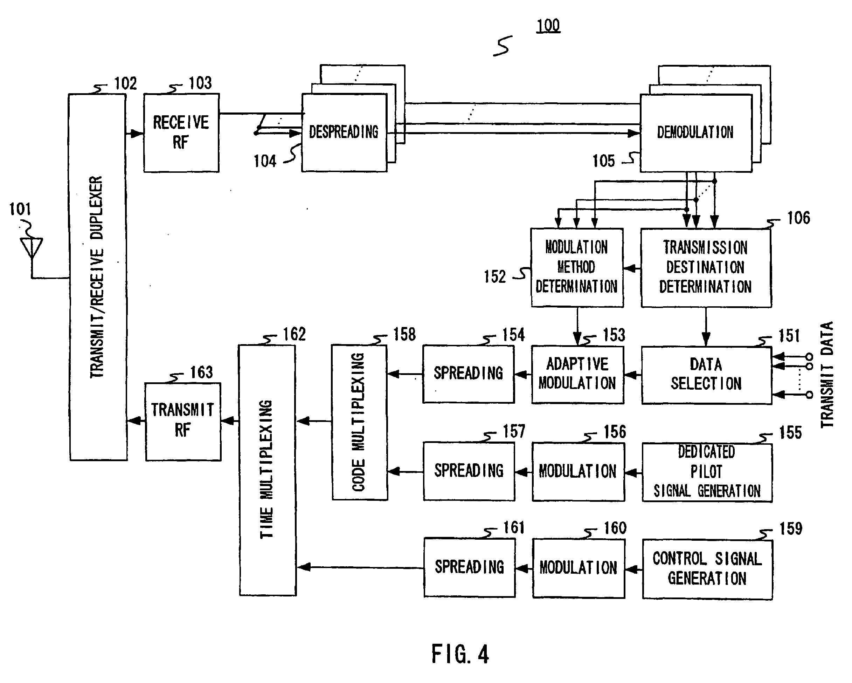

FIG.4 is a block diagram showing the configuration of a base station apparatus 100 according to Embodiment 1 of the present invention.

In FIG.4, a base station apparatus 100 is provided with an antenna 101, transmit/receive duplexer 102, receive RF section 103, despreading sections 104, demodulation sections 105, and transmission destination determination section 106. The base station apparatus 100 is further provided with a data selector 151, modulation method determination section 152, adaptive modulation section 153, spreading section 154, dedicated pilot signal generator 155, modulation section 156, spreading section 157, code multiplexer 158, control signal generator 159, modulation section 160, spreading section 161, time multiplexer 162, and transmit RF section 163.

The transmit/receive duplexer 102 outputs a signal received by the antenna 101 to the receive RF section 103. In addition, the transmit/receive duplexer 102 transmits a signal output from the transmit RF section 163 from the antenna 101 as a radio signal.

The receive RF section 103 converts a radio frequency received signal output from the transmit/receive duplexer 102 to a baseband digital signal, and outputs this signal to the despreading sections 104.

A despreading section 104 is provided for each of the communication terminal apparatuses with which radio communication is performed, and each despreading section 104 performs despreading processing on the baseband signal output from the receive RF section 103 and outputs the resulting signal to a demodulation section 105.

A demodulation section 105 is provided for each of the communication terminal apparatuses with which radio communication is performed, and each demodulation section 105 performs demodulation processing on the output signal from the corresponding despreading section 104. Each demodulation section 105 separates a data rate control (hereinafter referred to as "DRC") signal from the demodulated signal, and outputs this signal to the transmission destination determination section 106 and modulation method determination section 152. A DRC signal is a signal whereby a communication terminal apparatus indicates the transmission rate at which reception is possible at the desired quality.

Based on the DRC signals, the transmission destination determination section 106 determines the order of communication terminal apparatuses that perform high-speed downlink packet transmission by means of HDR. Then the transmission destination determination section 106 outputs information indicating the communication terminal apparatus to which data is to be transmitted to the data selector 151 and modulation method determination section 152.

Based on the determination of the transmission destination determination section 106, the data selector 151 selects only transmit data for the corresponding communication terminal apparatus, and outputs this transmit data to the adaptive modulation section 153.

Based on the DRC signal, the modulation method determination section 152 determines the data modulation method by which high-speed downlink packet transmission is to be performed. For example, if the downlink channel quality is good, a fast-rate modulation method such as 16QAM or 64QAM will be used, whereas if the downlink channel quality is poor, a slow-rate modulation method such as QPSK will be used. Then the modulation method determination section 152 indicates themodulationmethod to the adaptive modulation section 153.

The adaptive modulation section 153 modulates the output signal from the data selector 151 using the modulation method indicated by the modulation method determination section 152, and outputs the resulting signal to spreading section 154. Spreading section 154 spreads the output signal from adaptive modulation section 153 and outputs the resulting signal to the code multiplexer 158.

The dedicated pilot signal generator 155 generates a dedicated pilot signal and outputs this signal to modulation section 156. Modulation section 156 modulates the dedicated pilot signal and outputs the resulting signal to spreading section 157. Spreading section 157 spreads the output signal from modulation section 156 and outputs the resulting signal to the code multiplexer 158. The code multiplexer 158 performs code multiplexing of the adaptive spreading section 154 output signal and the spreading section 157 output signal, and outputs the resulting signal to the time multiplexer 162.

Thecontrol signal generator 159 generates a control signal needed in HDR including per-user power control information and a pilot signal common to all users, and outputs this to modulation section 160. Modulation section 160 modulates the control signal and outputs the resulting signal to spreading section 161. Spreading section 161 spreads the output signal from modulation section 160 and outputs the resulting signal to the time multiplexer 162. The time multiplexer 162 performs time multiplexing of the output signals from the code multiplexer 158 and spreading section 161, and outputs the resulting signal to the transmit RF section 163.

The transmit RF section 163 converts the baseband digital signal output from the time multiplexer 162 to a radio frequency signal, and outputs this signal to the transmit/receive duplexer 102.

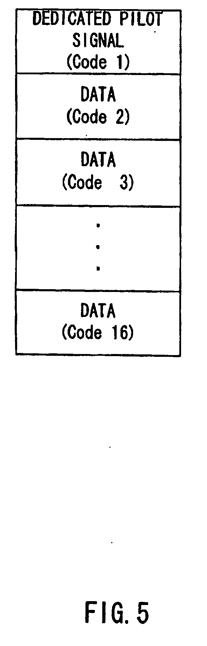

FIG.5 is a drawing showing the internal configuration of data with HDR according to the above embodiment. As shown in FIG. 5, the base station apparatus 100 uses one of 16 code-multiplexed data items as a dedicated pilot signal. For this purpose, the base station apparatus 100 generates a dedicated pilot signal by means of the dedicated pilot signal generator 155 and code-multiplexes data and the dedicated pilot signal by means of the code multiplexer 158.

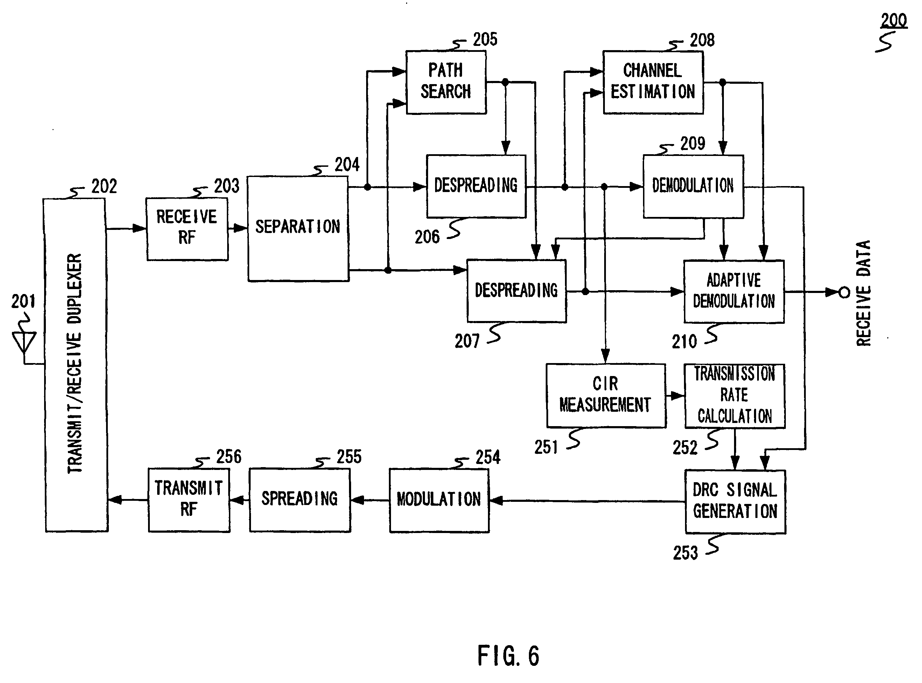

FIG.6 is a block diagram showing the configuration of a communication terminal apparatus 200 that receives data by means of HDR from the base station apparatus 100 shown in FIG.4.

In FIG.6, the communication terminal apparatus 200 is provided with an antenna 201, transmit/receive duplexer 202, receive RF section 203, separator 204, path search section 205, despreading section 206, despreading section207,channel estimation section 208, demodulation section 209, and adaptive demodulation section 210. The communication terminal apparatus 200 is further provided with a CIR measurement section 251, transmission rate calculation section 252, DRC signal creation section 253, modulation section 254, spreading section 255, and transmit RF section 256.

The transmit/receive duplexer 202 outputs a signal transmitted as a radio signal from the base station apparatus 100 and received as a radio signal by the antenna 201 to the receive RF section 203. In addition, the transmit/receive duplexer 202 transmits an output signal from the transmit RF section 256 from the antenna 201 to the base station apparatus 100 as a radio signal.

The receive RF section 203 converts a received signal output from the transmit/receive duplexer 202 to a baseband digital signal, and outputs this signal to the separator 204.

The separator 204 separates the control signal part and data part time-multiplexed in the baseband signal output from the receive RF section 203, outputs the control signal part to the path search section 205 and despreading section 206, and outputs the data part to the path search section 205 and despreading section 207.

Using the common pilot signal included in the control signal part and the dedicated pilot signal code-multiplexed in the data part, the path search section 205 performs a so-called path search in which it creates a delay profile and estimates the radio wave arrival time. Then the path search section 205 outputs information indicating the radio wave arrival time to despreading section 206 and despreading section 207. By performing a path search using the dedicated pilot signal code-multiplexed in the data part, it is possible to prevent erroneous path detection.

Despreading section 206 refers to the radio wave arrival time, despreads the control signal part of the baseband signal, and outputs the resulting signal to the channel estimation section 208, demodulation section 209, and CIR measurement section 251.

If communication resources have been allocated to this station, despreading section 207 refers to the radio wave arrival time, despreads the data part of the baseband signal, and outputs the resulting signal to the channel estimation section 208 and adaptive demodulation section 210.

The channel estimation section 208 estimates channel fluctuation using the common pilot signal included in the despread control signal part and the dedicated pilot signal code-multiplexed in the despread data part. By estimating channel fluctuation using the dedicated pilot signal code-multiplexed in the data part, it is possible to adequately compensate for phase shift of the data part even when a change of phase between the common pilot signal section and the data signal section is sudden.

The demodulation section 209 performs demodulation after compensating the output signal from despreading section 206 for channel fluctuation, and extracts the signal indicating communication resource allocation. Then, if communication resources have been allocated to this station, the demodulation section 209 outputs a signal indicating this to despreading section 207, and outputs a signal indicating the modulation method to the adaptive demodulation section 210.

Based on the signal indicating the modulation method output from the demodulation section 209, the adaptive demodulation section 210 demodulates the output signal from despreading section 207 and extracts receive data.

The CIR measurement section 251 measures the CIR from the common pilot signal output from despreading section 206, and outputs this to the transmission rate calculation section 252.

Based on the CIR measured by the CIR measurement section 251, the transmission rate calculation section 252 calculates the transmission rate at which reception is possible with the desired quality, and outputs this to the DRC signal creation section 253.

The DRC signal creation section 253 generates a DRC signal based on the transmission rate calculated by the transmission rate calculation section 252, and outputs this signal to the modulation section 254.

The modulation section 254 modulates the DRC signal and outputs the resulting signal to the spreading section 255. The spreading section 255 spreads the output signal from the modulation section 254, and outputs the resulting signal to the transmit RF section 256. The transmit RF section 256 performs frequency conversion of the output signal from the spreading section 255 to radio frequency, and outputs the resulting signal to the transmit/receive duplexer 202.

The procedure for transmitting and receiving signals between the above base station apparatus 100 shown in FIG.4 and an above communication terminal apparatus 200 shown in FIG.6 is described below.

First, at the start of communication, a control signal including a common pilot signal is generated by the control signal generator 159 of the base station apparatus 100. The control signal is modulated by modulation section 160, spread by spreading section 161, and output to the time multiplexer 162. In the time slot for transmitting a control signal as shown in FIG. 1, only the spread control signal is output from the time multiplexer 162 to the transmit RF section 163. The spread control signal is frequency-converted to radio frequency by the transmit RF section 163, and is transmitted as a radio signal to each communication terminal apparatus 200 from the antenna 101 via the transmit/receive duplexer 102.

The radio signal comprising only a control signal transmitted from the base station apparatus 100 is received by the antenna 201 of the communication terminal apparatus 200, passes through the transmit/receive duplexer 202, and is frequency-converted to baseband by the receive RF section 203. The baseband signal control signal is output to the path search section 205 and despreading section 206 via the separator 204. In the path search section 205, the radio wave arrival time is estimated based on the common pilot signal included in the control signal. The baseband signal control signal is despread by despreading section 206 and output to the CIR measurement section 251.

Next, the CIR is calculated by the CIR measurement section 251 based on the common pilot signal included in the control signal output from despreading section 206, and, based on the CIR, the transmission rate at which communication is possible at the desired quality is calculated by the transmission rate calculation section 252. A DRC signal indicating the relevant transmission rate is then generated by the DRC signal creation section 253.

The DRC signal is modulated by the modulation section 254, spread by the spreading section 255, frequency-converted to radio frequency by the transmit RF section 256, and transmitted to the base station apparatus 100 as a radio signal from the antenna 201 via the transmit/receive duplexer 202.

The signal transmitted as a radio signal from the communication terminal apparatus 200 is received by the antenna 101 of the base station apparatus 100, passes through the transmit/receive duplexer 102, is frequency-converted to baseband by the receive RF section 103, spread by despreading sections 104, and demodulated by demodulation sections 105, and the DRC signal is extracted.

Next, communication resource allocation to each communication terminal apparatus 200 is determined by the transmission destination determination section 106 based on the DRC signal, and the downlink transmit data modulation method is determined by the modulation method determination section 152.

Then a signal indicating communication resource allocation and the modulation method is generated by the control signal generator 159. The generated signal is modulated by modulation section 160, spread by spreading section 161, and output to the time multiplexer 162, and is frequency-converted to radio frequency by the transmit RF section 163, and transmitted as a radio signal to all communication terminal apparatuses 200 from the antenna 101 via the transmit/receive duplexer 102.

In each communication terminal apparatus 200, the signal indicating communication resource allocation transmitted from the base station apparatus 100 is received, the slot in which data for that particular terminal is sent is detected, and reception processing is performed on that slot. The reception method used at this time is the same as the conventional method, and therefore a description thereof is omitted here.

After the signal indicating communication resource allocation has been transmitted, in the base station apparatus 100 a control signal including the generated common pilot signal, etc., is generated by the control signal generator 159, modulated by modulation section 160, spread by spreading section 161, and output to the time multiplexer 162.

On the other hand, downlink transmit data to be sent from the base station apparatus 100 to the communication terminal apparatus 200 is modulated by the adaptive modulation section 153 using a modulation method whereby reception is possible by the communication terminal apparatus 200, spread by spreading section 154, and output to the code multiplexer 158. Also, a dedicated pilot signal is generated by the dedicated pilot signal generator 155, modulated by modulation section 156, spread by spreading section 157, and output to the code multiplexer 158.

In the code multiplexer 158, the spread downlink transmit data and spread dedicated pilot signal are code-multiplexed. In the time multiplexer 162, the output signal from the code multiplexer 158 is output in the data signal time slots shown in FIG. 1. The output signal from the time multiplexer 162 is frequency-converted to radio frequency by the transmit RF section 163, and is transmitted to each communication terminal apparatus 200 as a radio frequency signal from the antenna 101 via the transmit/receive duplexer 202.

In a communication terminal apparatus 200, the following demodulation processing is performed for the slot in which data for that terminal is transmitted.

The signal transmitted as a radio signal from the base station apparatus 100 is received by the antenna 201 of the communication terminal apparatus 200, passes through the transmit/receive duplexer 202, and is frequency-converted to baseband by the receive RF section 203.

The baseband signal control signal is output to the path search section 205 and despreading section 206 via the separator 204. On the other hand, baseband signal data is output to the path search section 205 and despreading section 207 via the separator 204.

In the path search section 205, the radio wave arrival time is estimated based on the common pilot signal included in the control signal and the dedicated pilot signal time-multiplexed with the data.

The baseband signal control signal is despread by despreading section 206 and output to the demodulation section 209 and CIR measurement section 251.

Then, in the channel estimation section 208, channel fluctuation is estimated using the common pilot signal and dedicated pilot signal, and in the demodulation section 209, the output signal of despreading section 206 is demodulated taking account of channel fluctuation. Also, the CIR is calculated for the common pilot signal by the CIR measurement section 251, and, based on the CIR, the transmission rate at which communication is possible at the desired quality is calculated by the channel estimation section 352.

In despreading section 207, the data component of the baseband signal is despread. Then channel fluctuation is estimated by the channel estimation section 208 based on the common pilot signal and dedicated pilot signal, the despread data is demodulated by the adaptive demodulation section 210 taking account of channel fluctuation, and the desired data is extracted.

By having a base station apparatus transmit a dedicated pilot signal using one of the 16 codes used for data transmission in this way, a communication terminal apparatus can perform a path search using a dedicated pilotsignal,and estimate channelfluctuation, making it possible to maintain data-part reception quality even when phase changes are sudden.

### (Embodiment 2)

In Embodiment 2, a case will be described in which an adaptive array antenna (hereinafter abbreviated to "AAA") is applied to HDR.

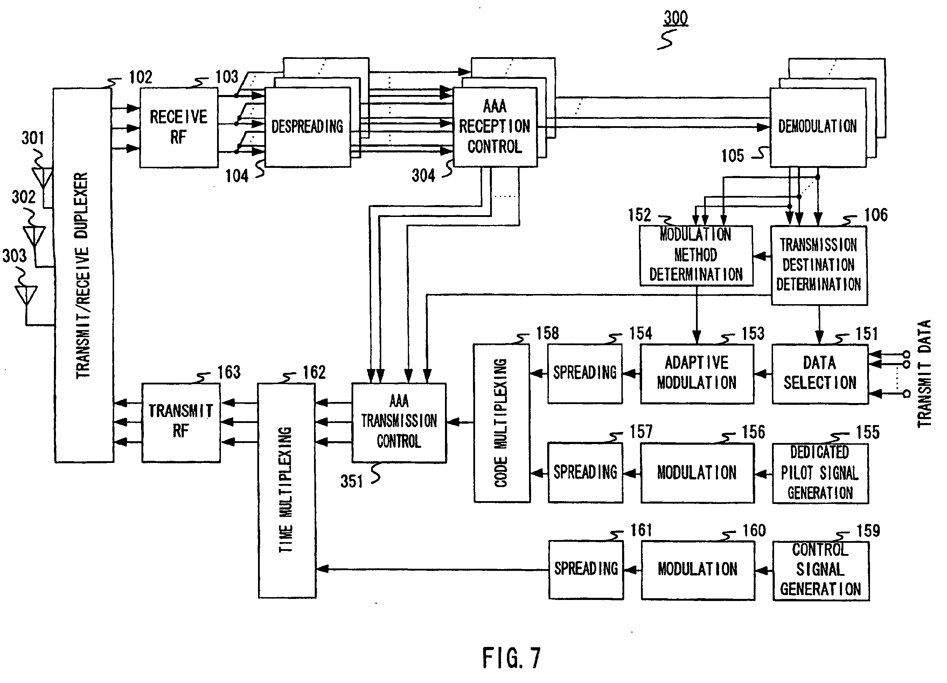

FIG.7 is a block diagram showing the configuration of a base station apparatus 300 according to Embodiment 2 of the present invention. Parts in the base station apparatus 300 shown in FIG.7 identical to those in the base station apparatus 100 shown in FIG.4 are assigned the same codes as in FIG.4 and their detailed explanations are omitted.

The configuration of the base station apparatus 300 shown in FIG.7 differs from that of the base station apparatus 100 shown in FIG.4 in that antennas 301 through 303 comprising an array antenna are provided instead of antenna 101, and an AAA reception controller 304 and AAA transmission controller 351 are added.

The transmit/receive duplexer 102 outputs signals received by antennas 301 through 303 to a receive RF section 103. In addition, the transmit/receive duplexer 102 transmits signals output from a transmit RF section 163 as radio signals from antennas 301 through 303.

The receive RF section 103 converts radio frequency received signals output from the transmit/receive duplexer 102 to baseband digital signals, and outputs these signals to respective despreading sections 104. The despreading sections 104 despread the output signals from the receive RF section 103 and output the respective signals to AAA reception controllers 304.

An AAA reception controller 304 is provided for each communication terminal apparatus with which communication is performed, and these AAA reception controllers 304 perform array combining by estimating the received radio wave direction of arrival and calculating a complex coefficient (hereinafter referred to as "weight") for generating directionality for the received signal, and performing complex multiplication of weights for despread signals output from despreading sections 104. Each AAA reception controller 304 then outputs a signal after array combining to a demodulation section 105, and outputs information showing the weight to the AAA transmission controller 351.

A transmission destination determination section 106 outputs information indicating the communication terminal apparatus determined as the transmission destination to a data selector 151, a modulation method determination section 152, and the AAA transmission controller 351.

A code multiplexer 158 performs code multiplexing of the output signal from a spreading section 154 and the output signal from a spreading section 157, and outputs the resulting signal to the AAA transmission controller 351.

The AAA transmission controller 351 multiplies the output signal from the code multiplexer 158 by the weights calculated by the AAA reception controllers 304, or the weights calculated by the AAA reception controllers 304 that have undergone processing such as conversion taking account of the difference between inbound signal and downlink signal frequencies, to give directionality, and outputs signals corresponding to antennas 301 through 303 to a time multiplexer 162.

The time multiplexer 162 performs time multiplexing of the AAA transmission controller 351 output signals, which have directionality, and the spreading section 161 output signals, which do not have directionality.

The transmit RF section 163 converts the baseband digital signals output from the time multiplexer 162 to radio frequency signals, and outputs these signals to the transmit/receive duplexer 102.

Since, with HDR, it is necessary for a control signal transmitted by a base station apparatus to be received by all communication terminal apparatuses, the base station apparatus cannot here perform directional transmission of control signals.

When a control signal is transmitted nondirectionally and data is transmitted directionally, phase rotation of the two differs at the time of transmission, and therefore it is not possible to perform received signal data part path search and channel fluctuation compensation using a common pilot signal included in a control signal.

With this embodiment, on the other hand, by having a base station apparatus transmit a dedicated pilot signal using one of the 16 codes used for data transmission, and performing directional transmission of the dedicated pilot signal, a communication terminal apparatus can perform a path search using the dedicated pilot signal, and estimate channel fluctuation, making it possible to compensate adequately for data part phase shift when an adaptive array antenna is applied to HDR.

The configuration of a communication terminal apparatus according to this embodiment is the same as that of the communication terminal apparatus 200 shown in FIG.6 above, and therefore a description thereof is omitted here.

### (Embodiment 3)

Here, the fact that one of the codes originally for data transmission is used for dedicated pilot signal transmission causes a fall in transmission efficiency. Thus, when a fast-rate M-ary modulation method such as 16QAM or 64QAM is used, compensation for data part phase shift using a dedicated pilot signal is necessary because of susceptibility to the effects of fading fluctuation, but when a slow-rate modulation method such as BPSK or QPSK is used, it is possible to compensate adequately for data part phase shift using a common pilot signal.

In Embodiment 3, a case is described in which dedicated pilot signal transmission control is performed in accordance with the modulation method.

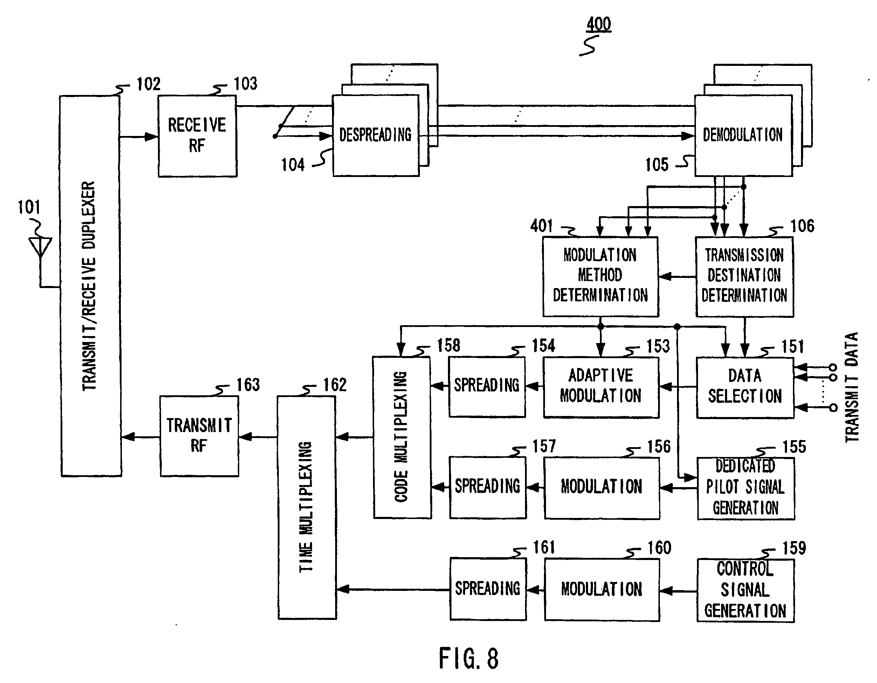

FIG. 8 is a block diagram showing the configuration of a base station apparatus 400 according to Embodiment 3 of the present invention. Parts in the base station apparatus 400 shown in FIG.8 identical to those in the base station apparatus 100 shown in FIG.4 are assigned the same codes as in FIG.4 and their detailed explanations are omitted.

The base station apparatus 400 shown in FIG. 8 differs from the base station apparatus 100 shown in FIG.4 in that the operation of demodulation method determination section 401 differs from that of modulation method determination section 152.

The demodulation method determination section 401 determines the data modulation method by which high-speed downlink packet transmission is to be performed. For example, if the downlink channel quality is good, a fast-rate modulation method such as 16QAM or 64QAM will be used, whereas if the downlinkchannel quality is poor, a slow-rate modulation method such as QPSK will be used. Then the demodulation method determination section 401 indicates the modulation method to an adaptive modulation section 153, and also outputs a signal indicating the modulation method to a data selector 151, dedicated pilot signal generator 155, and code multiplexer 158.

The data selector 151 outputs 15 codes' worth of transmit data to the adaptive modulation section 153 in the case of a fast-rate modulation method, and outputs 16 codes' worth of transmit data to the adaptive modulation section 153 in the case of a slow-rate modulation method.

The dedicated pilot signal generator 155 generates a dedicated pilot signal in the case of a fast-rate modulation method, and halts dedicated pilot signal generation in the case of a slow-rate modulation method.

The code multiplexer 158 performs code multiplexing of an adaptive spreading section 154 output signal and spreading section 157 output signal and outputs the resulting signal to a time multiplexer 162 in the case of a fast-rate modulation method, and outputs the adaptive spreading section 154 output signal directly to the time multiplexer 162 in the case of a slow-rate modulation method.

By having one of the 16 codes for data transmission used for dedicated pilot signal transmission only when using a fast-rate modulation method susceptible to the effects of fading fluctuation in this way, it is possible to improve transmission efficiency when using a slow-rate modulation method.

The configuration of a communication terminal apparatus according to this embodiment is the same as that of the communication terminal apparatus 200 shown in FIG.6 above, and therefore a description thereof is omitted here.

### (Embodiment 4)

Here, when the speed of movement of a communication terminal apparatus to which data is transmitted is high, changes in the propagation environment tend to occur suddenly, and it is highly necessary to compensate for data-part phase shift using a dedicated pilot signal. The speed of movement of a communication terminal apparatus can be estimated by measuring the maximum Doppler frequency.

In Embodiment 4, a case is described in which one of 16 codes is used for dedicated pilot signal transmission when the speed of movement of a communication terminal apparatus is high, and the relevant communication terminal apparatus is notified of this fact.

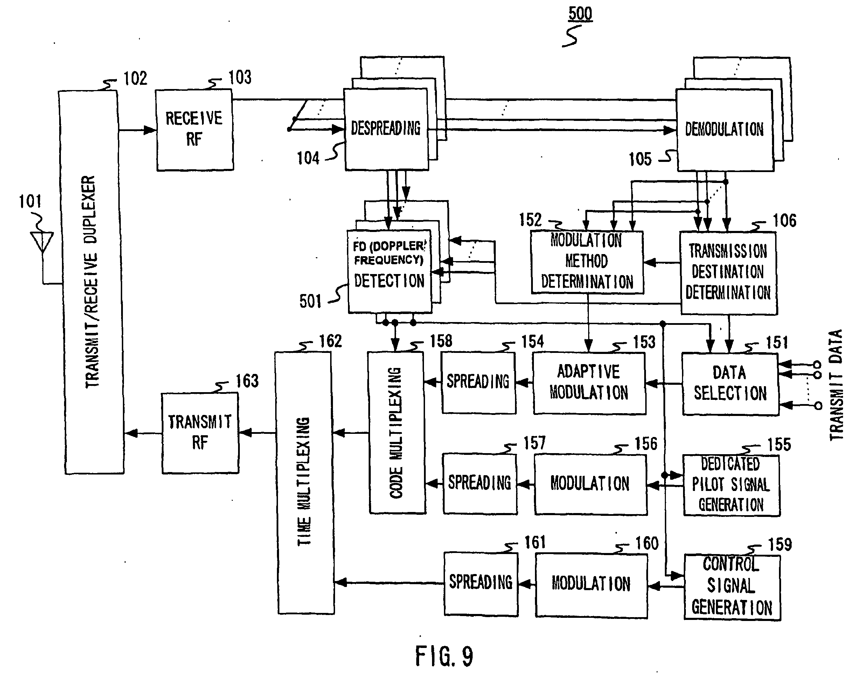

FIG.9 is a block diagram showing the configuration of a base station apparatus 500 according to Embodiment 4 of the present invention. Parts in the base station apparatus 500 shown in FIG.9 identical to those in the base station apparatus 100 shown in FIG.4 are assigned the same codes as in FIG.4 and their detailed explanations are omitted.

The configuration of the base station apparatus 500 shown in FIG.9 differs from that of the base station apparatus 100 shown in FIG.4 in that FD Doppler frequency detection sections 501 have been added.

A receive RF section 103 converts a radio frequency received signal output from a transmit/receive duplexer 102 to a baseband digital signal, and outputs this signal to despreading sections 104. The despreading sections 104 perform despreading processing on the output signal from the receive RF section 103, and output the resulting signals to demodulation sections 105 and FD detection sections 501.

A transmission destination determination section 106 outputs information indicating the communication terminal apparatus to which data is to be transmitted to a data selector 151, a modulation method determination section 152, and the FD detection sections 501.

An FD detection section 501 is provided for each communication terminal apparatus with which radio communication is performed. Each FD detection section 501 measures the maximum Doppler frequency from the spread signal output from the corresponding despreading section 104, and determines whether or not the maximum Doppler frequency is higher than a predetermined threshold value. The FD detection section 501 then outputs a signal indicating the determination result for the communication terminal apparatus to which data is to be transmitted to the data selector 151, a dedicated pilot signal generator 155, a codemultiplexer 158, and a control signal generator 159. The maximum Doppler frequency can be measured by detecting a pilot signal transmitted from a communication terminal apparatus and calculating the amount of phase rotation with respect to the previous signal.

The data selector 151 outputs 15 codes' worth of transmit data to an adaptive modulation section 153 when the maximum Doppler frequency is higher than the predetermined threshold value, and outputs 16 codes' worth of transmit data to the adaptive modulation section 153 otherwise.

The dedicated pilot signal generator 155 generates a dedicated pilot signal when the maximum Doppler frequency is higher than the predetermined threshold value, and halts dedicated pilot signal generation otherwise.

The code multiplexer 158 performs code multiplexing of an adaptive spreading section 154 output signal and spreading section 157 output signal and outputs the resulting signal to a time multiplexer 162 when the maximum Doppler frequency is higher than the predetermined threshold value, and outputs the adaptive spreading section 154 output signal directly to the time multiplexer 162 otherwise.

When the maximum Doppler frequency is higher than the predetermined threshold value, the control signal generator 159 generates a control signal indicating that a dedicated pilot signal is embedded in the data section in addition to the usual control signal, and outputs this to a modulation section 160.

By having one of the 16 codes for data transmission used for dedicated pilot signal transmission only when the speed of movement of a communication terminal apparatus is high in this way, it is possible to improve transmission efficiency when the speed of movement of a communication terminal apparatus is low.

The configuration of a communication terminal apparatus according to this embodiment is the same as that of the communication terminal apparatus 200 shown in FIG.6 above, and therefore a description thereof is omitted here.

### (Embodiment 5)

Here, if receive data cannot be demodulated by a communication terminal apparatus to which data has been transmitted, the same data must be retransmitted to that communication terminal apparatus. If the reception quality when the data is retransmitted is not made higher than before, it is highly probable that the receive data will fail to be demodulated again, and repeated data retransmissions will lead to a fall in transmission efficiency. However, if a dedicated pilot signal is transmitted code-multiplexed with the data, reception quality can be raised compared with the case where a dedicated pilot signal is not transmitted.

In Embodiment 5, a case is described in which one of 16 codes is used for dedicated pilot signal transmission when retransmitting, and the relevant communication terminal apparatus is notified of this fact.

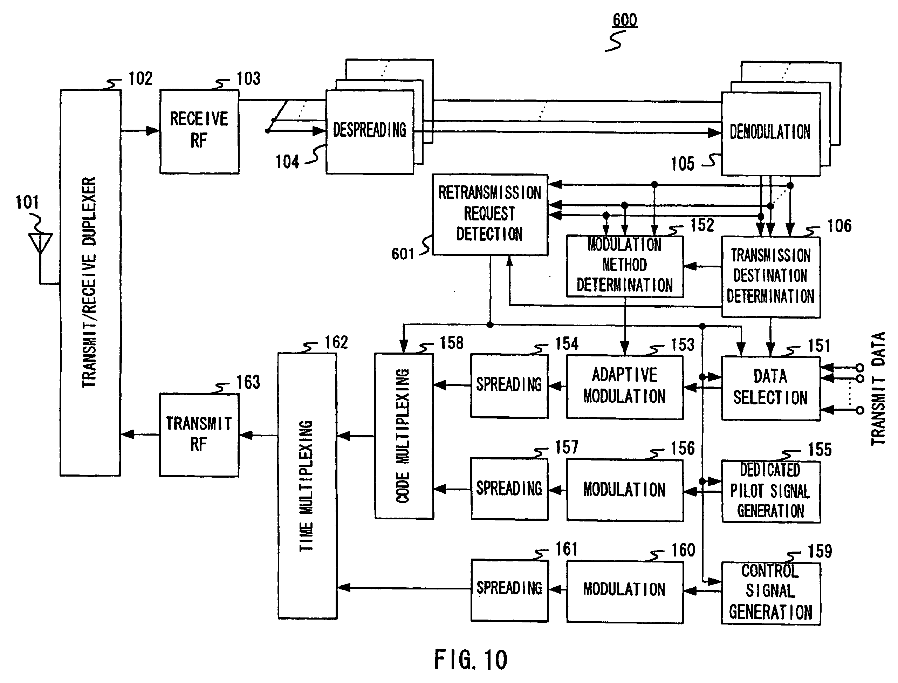

FIG. 10 is a block diagram showing the configuration of a base station apparatus 600 according to Embodiment 5 of the present invention. Parts in the base station apparatus 600 shown in FIG.10 identical to those in the base station apparatus 100 shown in FIG.4 are assigned the same codes as in FIG.4 and their detailed explanations are omitted.

The configuration of the base station apparatus 600 shown in FIG.10 differs from that of the base station apparatus 100 shown in FIG.4 in that a retransmission request detection section 601 has been added.

The retransmission request detection section 601 detects a signal (hereinafter referred to as "retransmission request signal") requesting data retransmission transmitted from a communication terminal apparatus to which data has been transmitted, and outputs a signal indicating the detection result to a data selector 151, dedicated pilot signal generator 155, code multiplexer 158, and control signal generator 159.

The data selector 151 outputs 15 codes' worth of transmit data to an adaptive modulation section 153 when data is retransmitted, and outputs 16 codes' worth of transmit data to the adaptive modulation section 153 otherwise.

The dedicated pilot signal generator 155 generates a dedicated pilot signal when data is retransmitted, and halts dedicated pilot signal generation otherwise.

The code multiplexer 158 performs code multiplexing of an adaptive spreading section 154 output signal and spreading section 157 output signal and outputs the resulting signal to a time multiplexer 162 when data is retransmitted, and outputs the adaptive spreading section 154 output signal directly to the time multiplexer 162 otherwise.

When data is retransmitted, the control signal generator 159 generates a control signal indicating that a dedicated pilot signal is embedded in the data section in addition to the usual control signal, and outputs this to a modulation section 160.

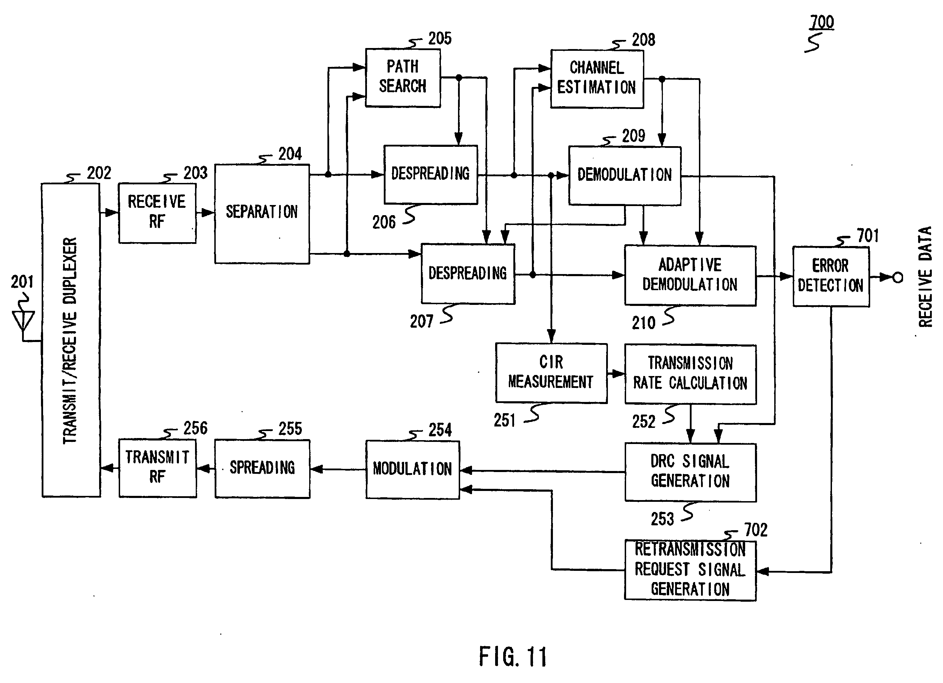

FIG. 11 is a block diagram showing the configuration of a communication terminal apparatus 700 that receives data by means of HDR from the base station apparatus 600 shown in FIG.10. Parts in the communication terminal apparatus 700 shown in FIG.11 identical to those in the communication terminal apparatus 200 shown in FIG.6 are assigned the same codes as in FIG.6 and their detailed explanations are omitted.

The configuration of the communication terminal apparatus 700 shown in FIG.11 differs from that of the communication terminal apparatus 200 shown in FIG.6 in that an error detection section 701 and retransmission request signal generator 702 have been added.

An adaptive demodulation section 210 demodulates the output signal of a despreading section 207 based on a signal indicating the modulation method output from a demodulation section 209, and outputs the demodulated signal to the error detection section 701.

The error detection section 701 performs error detection on the demodulated signal, and if an error is not detected, extracts receive data. If an error is detected, on the other hand, the error detection section 701 outputs a signal indicating this fact to the retransmission request signal generator 702.

When an error has been detected by the error detection section 701, the retransmission request signal generator 702 generates a retransmission request signal and outputs this signal to a modulation section 254.

The modulation section 254 modulates the DRC signal or retransmission request signal and outputs the modulated signal to a spreading section 255.

By having one of the 16 codes for data transmission used for dedicated pilot signal transmission only when retransmitting data in this way, it is possible to raise reception quality when retransmitting and prevent repeated data retransmissions, and so improve transmission efficiency.

### (Embodiment 6)

Here, total transmission power is fixed in HDR. However, heretofore, there have been no particular restrictions concerning per-user transmission power. Thus, in Embodiment 6, a case is described in which the transmission power ratio between code-multiplexed transmit data and a dedicated pilot signal is controlled in accordance with the propagation environment.

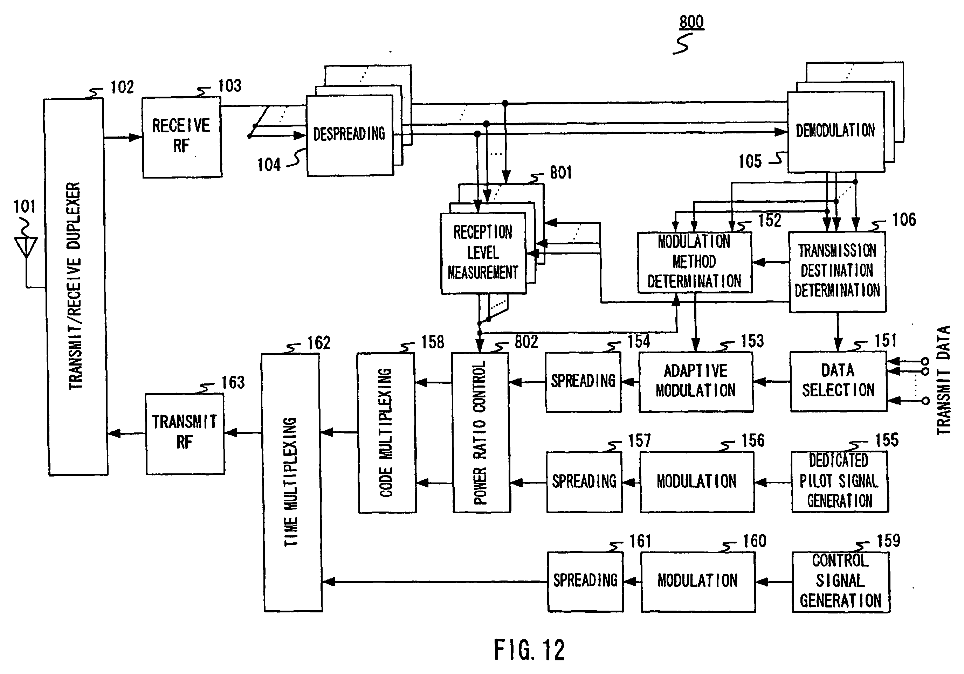

FIG.12 is a block diagram showing the configuration of a base station apparatus 800 according to Embodiment 6 of the present invention. Parts in the base station apparatus 800 shown in FIG.12 identical to those in the base station apparatus 100 shown in FIG.4 are assigned the same codes as in FIG.4 and their detailed explanations are omitted.

The configuration of the base station apparatus 800 shown in FIG.12 differs from that of the base station apparatus 100 shown in FIG.4 in that reception level measurement sections 801 and a power ratio controller 802 have been added.

A despreading section 104 is provided for each of the communication terminal apparatuses with which radio communication is performed, and each despreading section 104 performs despreading processing on the baseband signal output from the receive RF section 103 and outputs the resulting signal to a demodulation section 105 and reception level measurement section 801.

A transmission destination determination section 106 outputs information indicating the communication terminal apparatus to which data is to be transmitted to a data selector 151, a modulation method determination section 152, and the reception level measurement sections 801.

A reception level measurement section 801 is provided for each communication terminal apparatus with which radio communication is performed. Each reception level measurement section 801 measures the reception level from a signal spread by a despreading section 104, and determines the state of the propagation environment. The reception level measurement section 801 then outputs a signal indicating the state of the propagation environment for the communication terminal apparatus to which data is to be transmitted to the modulation method determination section 152 and power ratio controller 802.

The power ratio controller 802 controls the transmission power ratio between spread transmit data and a spread dedicated pilot signal in accordance with the state of the propagation environment. For example, when the state of the propagation environment is good, the communication terminal apparatus can perform a path search and channel fluctuation estimation without having a dedicated pilot signal transmitted at high power, and therefore the transmission power of the dedicated pilot signal is weak, and the data transmission power is increased compared with the dedicated pilot signal transmission power.

The modulation method determination section 152 determines the modulation method taking account of the state of the propagation environment. For example, if the state of the propagation environment is good, the power per data code can be increased, and therefore a fast-rate modulation method can be used.

By controlling the transmission power ratio between data and a dedicated pilot signal in accordance with the state of the propagation environment in this way, when the state of the propagation environment is good, power per data code can be increased compared with the case where data and a dedicated pilot signal are transmitted at the same power, making it possible to transmit data at a higher M-ary level, and so improve transmission efficiency.

In this embodiment, a case has been described in which the state of the propagation environment is determined, and the transmission power ratio between data and a dedicated pilot signal controlled, based on the result of reception level measurement, but the present invention is not limited to this, and it is also possible for the state of the propagation environment to be determined, and the transmission power ratio between data and a dedicated pilot signal controlled, using a different method, such as one based on the modulation method or the number of retransmissions, for example.

The configuration of a communication terminal apparatus according to this embodiment is the same as that of the communication terminal apparatus 200 shown in FIG.6 above, and therefore a description thereof is omitted here.

### (Embodiment 7)

In Embodiment 7, a case is described in which fading fluctuation is detected on the communication terminal apparatus side, and when fading fluctuation is severe, one of 16 codes is used for transmission of a dedicated pilot signal.

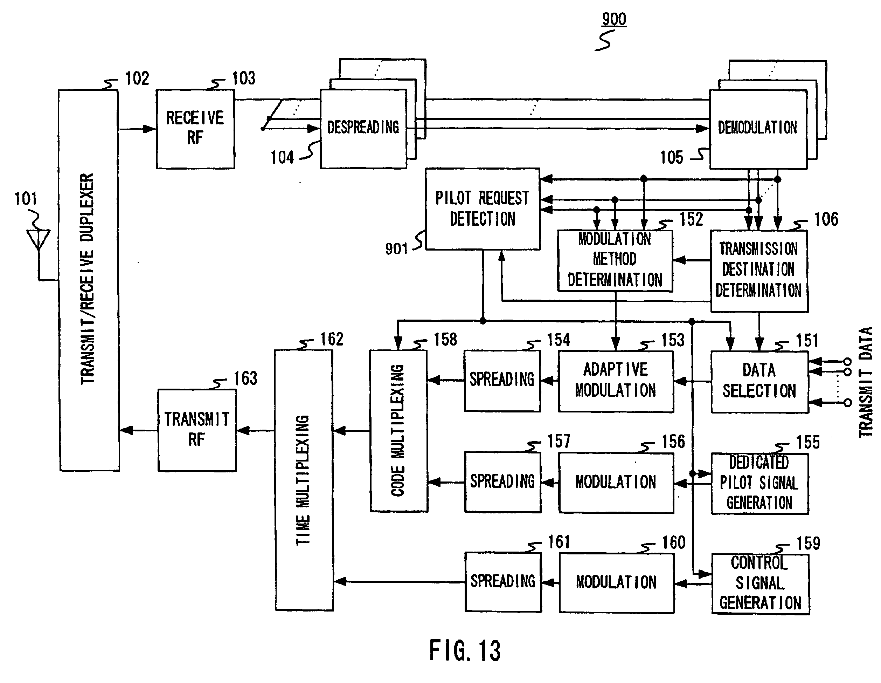

FIG. 13 is a block diagram showing the configuration of a base station apparatus 900 according to Embodiment 7 of the present invention. Parts in the base station apparatus 900 shown in FIG.13 identical to those in the base station apparatus 100 shown in FIG.4 are assigned the same codes as in FIG. 4 and their detailed explanations are omitted.

The configuration of the base station apparatus 900 shown in FIG.13 differs from that of the base station apparatus 100 shown in FIG.4 in that a pilot request detection section 901 has been added.

The pilot request detection section 901 detects a signal (hereinafter referred to as "pilot request signal") that is sent from a communication terminal apparatus to which data is transmitted and requests transmission of a dedicated pilot signal, and outputs a signal indicating the detection result to a data selector 151, dedicated pilot signal generator 155, code multiplexer 158, and control signal generator 159.

The data selector 151 outputs 15 codes' worth of transmit data to an adaptive modulation section 153 when dedicated pilot signal transmission is requested, and outputs 16 codes' worth of transmit data to the adaptive modulation section 153 otherwise.

The dedicated pilot signal generator 155 generates a dedicated pilot signal when dedicated pilot signal transmission is requested, and halts dedicated pilot signal generation otherwise.

The code multiplexer 158 performs code multiplexing of an adaptive spreading section 154 output signal and spreading section 157 output signal and outputs the resulting signal to a time multiplexer 162 when dedicated pilot signal transmission is requested, and outputs the adaptive spreading section 154 output signal directly to the time multiplexer 162 otherwise.

When dedicated pilot signal transmission is requested, the control signal generator 159 generates a control signal indicating that a dedicated pilot signal is embedded in the data section in addition to the usual control signal, and outputs this to a modulation section 160.

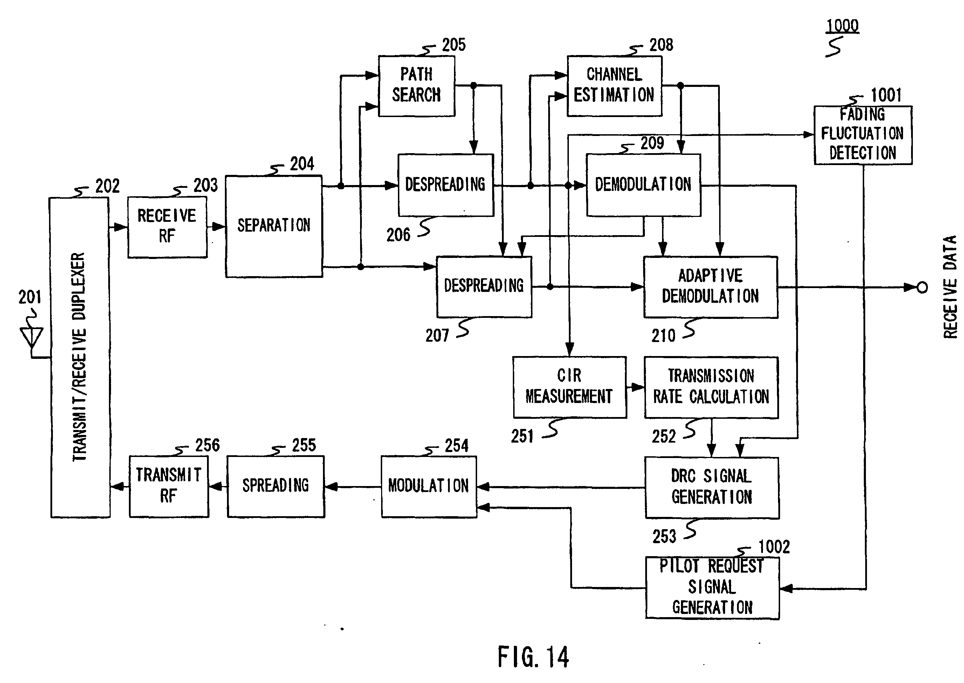

FIG.14 is a block diagram showing the configuration of a communication terminal apparatus 1000 that receives data by means of HDR from the base station apparatus 900 shown in FIG.13. Parts in the communication terminal apparatus 1000 shown in FIG.14 identical to those in the communication terminal apparatus 200 shown in FIG.6 are assigned the same codes as in FIG.6 and their detailed explanations are omitted.

The configuration of the communication terminal apparatus 1000 shown in FIG.14 differs from that of the communication terminal apparatus 200 shown in FIG.6 in that a fading fluctuation detection section 1001 and pilot request signal generator 1002 have been added.

A despreading section 206 refers to the radio wave arrival time, despreads the control signal part of the baseband signal, and outputs this to a channel estimation section 208, demodulation section 209, and CIR measurement section 251, and the fading fluctuation detection section 1001.

The fading fluctuation detection section 1001 detects the state of fading fluctuation based on the output signal from the despreading section 206, and outputs a signal indicating the detection result to the pilot request signal generator 1002.

If fading fluctuation is severe and adequate compensation for phase shift is determined not to be possible by means of a common pilot signal alone, the pilot request signal generator 1002 generates a pilot request signal and outputs this signal to a modulation section 254.

The modulation section 254 modulates the DRC signal or pilot request signal and outputs the modulated signal to a spreading section 255.

By detecting the state of fading fluctuation on the communication terminal apparatus side, and having one of the 16 codes for data transmission used for dedicated pilot signal transmission only when fading fluctuation is severe, it is possible to improve transmission efficiency when fading fluctuation is not severe.

In this embodiment, a case has been described in which a communication terminal apparatus determines the necessity or otherwise of a dedicated pilot signal based on the state of fading fluctuation, but the present invention is not limited to this, and it is also possible for the necessity or otherwise of a dedicated pilot signal to be determined based on a different factor.

Also, in the above embodiments, a case has been described in which 16-code multiplexing is used for HDR data, but the present invention is not limited to this. Furthermore, in the above embodiments, a case has been described in which a dedicated pilot signal is transmitted using one of the codes used for data transmission, but the present invention is not limited to this, and a dedicated pilot signal may be transmitted using a plurality of codes.

As described above, according to the present invention, by having a base station apparatus transmit a dedicated pilot signal using one of the codes used for data transmission, a communication terminal apparatus can perform a path search using a dedicated pilot signal, and estimate channel fluctuation, making it possible to maintain data-part reception quality even when phase changes are sudden when using HDR.

This application is based on Japanese Patent Application No.2000-255515 filed on August 25, 2000.

### Industrial Applicability

The present invention is suitable for use in a cellular communication system in which data is transmitted from a base station apparatus to a communication terminal apparatus at high speed using the CDMA method.

## Claims

1. A base station apparatus (100, 300, 400, 500, 600, 800, 900) comprising:
transmission destination determining means (106) for determining a communication terminal apparatus, to which high-speed downlink data is transmitted in accordance with information whereby each currently communicating communication terminal apparatus indicates a downlink transmission rate at which reception is possible;
modulating means (152, 153) for modulating high-speed downlink data using a modulation method in accordance with said information;
pilot signal generating means (155) for generating a dedicated pilot signal;
code multiplexing means (158) for performing code multiplexing of modulated high-speed downlink data and said dedicated pilot signal; and
transmitting means (162, 163) for performing time multiplexing and then radio transmission of a code-multiplexed signal and control signal.
**characterized in that**
said pilot signal generating means (155) adapted to generate the dedicated pilot signal in case of one of the following (a) to (c):
(a) a measured maximum Doppler frequency in a received signal is higher than a predetermined threshold value;
(b) a retransmission request signal requesting the retransmission of the high-speed downlink data is detected;
(c) a pilot request signal sent from the communication terminal requesting a transmission of the dedicated pilot signal is detected.

2. The base station apparatus according to claim 1, **characterized by** further comprising:
a plurality of antenna elements (301, 302, 303) composing an array antenna;
reception control means (304) for performing multiplication of a signal transmitted from each currently communicating communication terminal apparatus and received by said each antenna element by a complex coefficient; and
transmission control means (351) for performing multiplication of a signal that has undergone code multiplexing by said code multiplexing means (158) by the complex coefficient,
in that said transmitting means (162, 163) being further adapted to perform time multiplexing of a control signal and a signal that has undergone complex coefficient multiplication by said transmission control means (351) and then radio transmission of the time multiplexed signal.

3. The base station apparatus according to claim 1, **characterized by** further comprising:
reception level measuring means (801) for measuring a reception level; and
power ratio control means (802) for controlling a transmission power ratio between high-speed downlink data and a dedicated pilot signal in accordance with the measure reception level,
in that said code multiplexing means (158) being further adapted to perform code multiplexing of said high-speed downlink data and said dedicated pilot signal that are under transmission power ratio control.

4. The base station apparatus according to claim 3, **characterized in that** said modulating means (152, 153) being further adapted to modulate the high-speed downlink data using a higher rate modulation method when a greater reception level is measured by said reception level measuring means.

5. A communication terminal apparatus adapted to communicate with the base station as defined in claims 1 to 4, comprising:
path search means (205) for estimating a radio wave arrival time using a dedicated pilot signal included in a signal received from the base station apparatus;
despreading means (206) for despreading a received signal in accordance with an estimation result of said path search means;
channel estimating means (208) for estimating channel fluctuation using said pilot signal after despreading; and
demodulating means (209, 1001) for demodulating a received signal after compensation for channel fluctuation has been performed;
**characterized by** further comprising
generating means (1002) for generating a signal requesting transmission of a dedicated pilot signal from the base station apparatus, when having determined that quality can be improved by receiving said dedicate pilot signal.

## Patentansprüche

1. Basisstationsvorrichtung (100, 300, 400, 500, 600, 800, 900), die umfasst:
eine Sendeziel-Bestimmungseinrichtung (106), die eine Kommunikations-Endgerätevorrichtung, zu der Hochgeschwindigkeits-Downlinkdaten gesendet werden, entsprechend Informationen bestimmt, mit denen jede aktuell kommunizierende Kommunikations-Endgerätevorrichtung eine Downlink-Senderate anzeigt, bei der Empfang möglich ist;
eine Moduliereinrichtung (152, 153), die Hochgeschwindigkeits-Downlinkdaten unter Verwendung eines Modulationsverfahrens entsprechend den Informationen moduliert;
eine Pilotsignal-Erzeugungseinrichtung (155), die ein dediziertes Pilotsignal erzeugt;
eine Code-Multiplexiereinrichtung (158), die Code-Multiplexieren modulierter Hochgeschwindigkeits-Downlinkdaten und des dedizierten Pilotsignals durchführt; und
eine Sendeeinrichtung (162, 163), die Zeitmultiplexieren und dann Funk-Senden eines code-multiplexierten Signals und eines Steuersignals durchführt,
**dadurch gekennzeichnet, dass**
die Pilotsignal-Erzeugungseinrichtung (1 55) so eingerichtet ist, dass sie das dedizierte Pilotsignal in einem der folgenden Fälle a) bis c) erzeugt:
a) eine gemessene maximale Dopplerfrequenz in einem empfangenen Signal ist höher als ein vorgegebener Schwellenwert;
b) ein Sendewiederholungs-Anforderungssignal (retransmission request signal), das Wiederholung des Sendens der Hochgeschwindigkeits-Downlinkdaten anfordert, wird erfasst;
c) ein Pilot-Anforderungssignal, das von der Kommunikations-Endgerätevorrichtung gesendet wird und ein Senden des dedizierten Pilotsignals anfordert, wird erfasst.

2. Basisstationsvorrichtung nach Anspruch 1, **dadurch gekennzeichnet, dass** sie des Weiteren umfasst:
eine Vielzahl von Antennenelementen (301, 302, 303), die eine Array-Antenne bilden;
eine Empfangs-Steuereinrichtung (304), die Multiplikation eines von jeder aktuell kommunizierenden Kommunikations-Endgerätevorrichtung gesendeten und durch jedes Antennenelement empfangenen Signals mit einem komplexen Koeffizienten durchführt; und
eine Sende-Steuereinrichtung (351), die Multiplikation eines Signals, das Code-Multiplexierung durch die Code-Multiplexiereinrichtung (158) durchlaufen hat, mit dem komplexen Koeffizienten durchführt,
wobei die Sendeeinrichtung (162, 163) des Weiteren so eingerichtet ist, dass sie Zeitmultiplexieren eines Steuersignals und eines Signals, das Multiplikation mit dem komplexen Koeffizienten durch die Sende-Steuereinrichtung (351) unterzogen wurde, und anschließend Funk-Senden des zeitmultiplexierten Signals durchführt.

3. Basisstationsvorrichtung nach Anspruch 1, **dadurch gekennzeichnet, dass** sie des Weiteren umfasst:
eine Empfangspegel-Messeinrichtung (801), die einen Empfangspegel misst; und
eine Leistungsverhältnis-Steuereinrichtung (802), die ein Sendeleistungsverhältnis zwischen Hochgeschwindigkeits-Downlinkdaten und einem dedizierten Pilotsignal entsprechend dem gemessenen Empfangspegel steuert,
wobei die Code-Multiplexiereinrichtung (158) des Weiteren so eingerichtet ist, dass sie Code-Multiplexieren der Hochgeschwindigkeits-Downlinkdaten und des dedizierten Pilotsignals durchführt, die Sendeleistungsverhältnis-Steuerung unterliegen.

4. Basisstationsvorrichtung nach Anspruch 3, **dadurch gekennzeichnet, dass** die Moduliereinrichtung (152, 153) des Weiteren so eingerichtet ist, dass sie die Hochgeschwindigkeits-Downlinkdaten unter Verwendung eines Modulationsverfahrens mit höherer Rate moduliert, wenn ein höherer Empfangspegel durch die Empfangspegel-Messeinrichtung gemessen wird.

5. Kommunikations-Endgerätevorrichtung, die so eingerichtet ist, dass sie mit der Basisstation nach den Ansprüchen 1 bis 4 kommuniziert, und die umfasst:
eine Weg-Sucheinrichtung (205), die eine Funkwellen-Ankunftszeit unter Verwendung eines dedizierten Pilotsignals schätzt, das in einem von der Basisstationsvorrichtung empfangenen Signal enthalten ist;
eine Entspreizeinrichtung (206), die ein empfangenes Signal entsprechend einem Schätzungsergebnis der Weg-Sucheinrichtung entspreizt;
eine Kanal-Schätzeinrichtung (208), die Kanalschwankung unter Verwendung des Pilotsignals nach Entspreizen schätzt; und
eine Demoduliereinrichtung (209, 1001), die ein empfangenes Signal demoduliert, nachdem Kompensation für Kanalschwankung durchgeführt worden ist;
**dadurch gekennzeichnet, dass** sie des Weiteren umfasst:
eine Erzeugungseinrichtung (1002), die ein Signal erzeugt, das Senden eines dedizierten Pilotsignals von der Basisstationsvorrichtung anfordert, wenn durch Empfangen des dedizierten Pilotsignals festgestellt worden ist, dass die Qualität verbessert werden kann.

## Revendications

1. Dispositif de station de base (100, 300, 400, 500, 600, 800, 900) comprenant :
un moyen de détermination de destination de transmission (106) destiné à déterminer un dispositif de terminal de communication, auquel des données de liaison descendante à haute vitesse sont transmises conformément à des informations, grâce à quoi chaque dispositif de terminal de communication actuellement en cours de communication indique un débit de transmission de liaison descendante auquel une réception est possible,
un moyen de modulation (152, 153) destiné à moduler des données de liaison descendante à haute vitesse utilisant un procédé de modulation en fonction desdites informations,
un moyen de génération de signal pilote (155) destiné à générer un signal pilote spécialisé,
un moyen de multiplexage par code (158) destiné à exécuter un multiplexage par code des données de liaison descendante à haute vitesse et dudit signal pilote spécialisé, et
un moyen de transmission (162, 163) destiné à exécuter un multiplexage dans le temps et ensuite une transmission radio d'un signal multiplexé par code et d'un signal de commande,
**caractérisé en ce que**
ledit moyen de génération de signal pilote (155) est conçu pour générer le signal pilote spécialisé dans un des cas (a) à (c) suivants :
(a) une fréquence Doppler maximum mesurée dans un signal reçu est supérieure à une valeur de seuil prédéterminée,
(b) un signal de demande de retransmission, demandant la retransmission des données de liaison descendante à haute vitesse, est détecté,
(c) un signal de demande pilote envoyé depuis le terminal de communication demandant une transmission du signal pilote spécialisé, est détecté.

2. Dispositif de station de base selon la revendication 1, **caractérisé en ce qu'**il comprend en outre :
une pluralité d'éléments d'antennes (301, 302, 303) composant une antenne réseau,
un moyen de commande de réception (304) destiné à exécuter la multiplication d'un signal transmis depuis chaque dispositif de terminal de communication actuellement en communication et reçu par chaque dit élément d'antenne, par un coefficient complexe, et
un moyen de commande de transmission (351) destiné à exécuter une multiplication d'un signal, qui a subi un multiplexage par code par ledit moyen de multiplexage par code (158), par le coefficient complexe,
**en ce que** ledit moyen de transmission (162, 163) est en outre conçu pour exécuter un multiplexage dans le temps d'un signal de commande et d'un signal qui a subi une multiplication de coefficient complexe par ledit moyen de commande de transmission (351) et ensuite la transmission radio du signal multiplexé dans le temps.

3. Dispositif de station de base selon la revendication 1, **caractérisé en ce qu'**il comprend en outre :
un moyen de mesure de niveau de réception (801) destiné à mesurer un niveau de réception, et
un moyen de commande de rapport de puissances (802) destiné à commander un rapport de puissances d'émission entre des données de liaison descendante à haute vitesse et un signal pilote spécialisé en fonction du niveau de réception de la mesure,
**en ce que** ledit moyen de multiplexage par code (158) est en outre conçu pour exécuter un multiplexage par code desdites données de liaison descendante à haute vitesse et dudit signal pilote spécialisé qui sont sous la commande du rapport de puissances d'émission.

4. Dispositif de station de base selon la revendication 3, **caractérisé en ce que** ledit moyen de modulation (152, 153) est en outre conçu pour moduler les données de liaison descendante à haute vitesse en utilisant un procédé de modulation à plus haut débit lorsqu'un niveau de réception plus grand est mesuré par ledit moyen de mesure de niveau de réception.

5. Dispositif de terminal de communication conçu pour communiquer avec la station de base selon les revendications 1 à 4, comprenant :
un moyen de recherche de voie (205) destiné à estimer un instant d'arrivée d'onde radio en utilisant un signal pilote spécialisé compris dans un signal reçu du dispositif de station de base,
un moyen de regroupement (206) destiné à regrouper un signal reçu en fonction d'un résultat d'estimation dudit moyen de recherche de voie,
un moyen d'estimation de canal (208) destiné à estimer une fluctuation du canal en utilisant ledit signal pilote après le regroupement, et
un moyen de démodulation (209, 1001) destiné à démoduler un signal reçu après qu'une compensation d'une fluctuation du canal a été exécutée,
**caractérisé en ce qu'**il comprend en outre
un moyen de génération (1002) destiné à générer un signal demandant la transmission d'un signal pilote spécialisé depuis le dispositif de station de base, lorsqu'il a déterminé que la qualité peut être améliorée en recevant ledit signal pilote spécialisé.
